# EUROPÄISCHE PATENTSCHRIFT

(11) **EP 2 122 188 B1**
(45) Veröffentlichungstag und Bekanntmachung des Hinweises auf die Patenterteilung: **31.10.2012**
(21) Anmeldenummer: 07856580.1
(22) Anmeldetag: 11.12.2007
(51) Int. Cl.: F16C 11/06

(54) **KUGELGELENK**
BALL JOINT
JOINT SPHÉRIQUE

(30) Priorität: 12.01.2007 DE 102007001933
(43) Veröffentlichungstag der Anmeldung: 25.11.2009
(73) Patentinhaber: TRW Automotive GmbH, 73553 Alfdorf (DE)
(72) Erfinder: SCHAUMANN, Lothar, 40885 Ratingen (DE)
(74) Vertreter: Prinz & Partner
(86) Internationale Anmeldenummer: PCT/EP2007/010832
(87) Internationale Veröffentlichungsnummer: WO 2008/083808

(56) Entgegenhaltungen:
- EP-A- 0 231 479
- EP-A- 0 638 735
- EP-A- 0 924 441
- US-A- 3 953 139

## Beschreibung

Die Erfindung betrifft ein Kugelgelenks, insbesondere ein Radialkugelgelenk, gemäß dem Oberbegriff des Anspruchs 1.

Radialkugelgelenke werden beispielsweise in Fahrzeugen eingesetzt und müssen hohe Radialkräfte bei niedrigen Axialkräften und großen Kippwinkeln aufnehmen. Der über die Lebensdauer der Radialkugelgelenke auftretende Verschleiß kann dazu führen, daß das Kugelgelenk, bedingt durch freies Spiel im Gelenk, Geräusche im Fahrbetrieb verursacht.

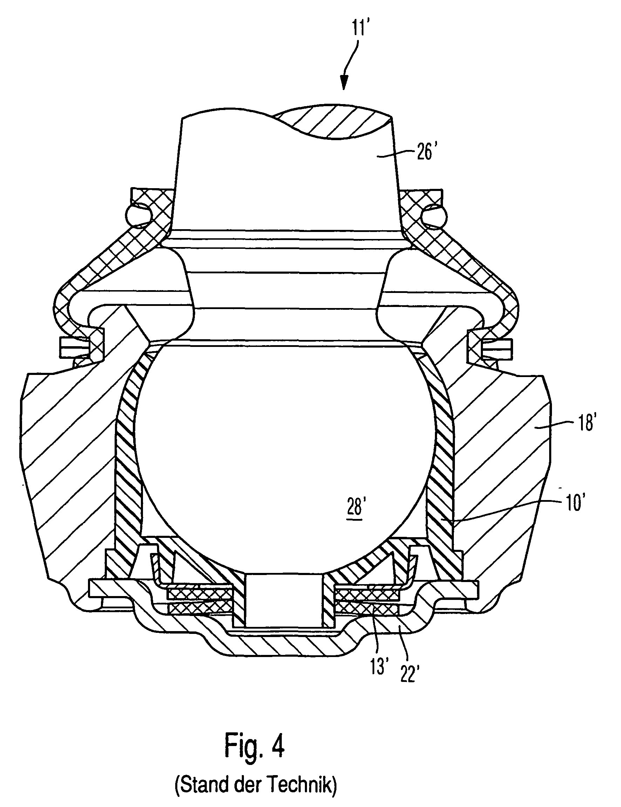

Um dieses freie Spiel im Gelenk zu verhindern, ist aus dem Stand der Technik ein Kugelgelenk 11' bekannt (vgl. Figur 4), bei dem zwischen dem Gehäusedeckel 22' und der Lagerschale 10' im zusammengesetzten Zustand des Gelenks separate, vorgespannte Federelemente 13' vorgesehen sind. Durch die Vorspannung der Federelemente 13' (in Figur 4 zwei Tellerfedern) wird die Lagerschale 10' gegen den Kugelkopf 28' des Kugelzapfens 26' gedrückt, so daß auch bei auftretendem Verschleiß der Lagerschale 10' ein ständiger Kontakt zwischen der Lagerschale 10' und dem Kugelzapfen 26' gegeben ist und kein freies Spiel zwischen dem Kugelkopf 28' und der Lagerschale 10' entsteht.

Die EP 0 638 735 A1 zeigt ein Kugelgelenk mit einem Kugelkopf, einer elastischen Lagerschale und einem Gehäuse, wobei der Kugelkopf und die Lagerschale in das Gehäuse eingeführt werden und nach einer Umformung des Gehäuses schwenkbar und unverlierbar im Gehäuse aufgenommen sind. Die Lagerschale ist mit verschiedenen Oberflächenstrukturen wie Rippen, Noppen, Ausnehmungen oder Konusflächen versehen, die mit zunehmender Last eine größer werdende Lagerfläche zwischen Kugelkopf und Lagerschale bzw. Lagerschale und Gehäuse ermöglichen. Statt separater Federelemente ist somit eine Lagerschale aus elastisch komprimierbarem Material vorgesehen, die allerdings ein Spiel resultierend aus Maßtoleranzen oder Verschleiß nur in sehr begrenztem Umfang ausgleichen und eine gewünschte Vorspannung aufrechterhalten kann.

In der EP 0 924 441 A1 wird ein Kugelgelenk sowie ein Verfahren zu seiner Vorspannung beschrieben. Das Kugelgelenk umfasst dabei ein Gehäuse, einen Kugelkopf, eine den Kugelkopf innenseitig aufnehmende Lagerschale, die sich am Gehäuse abstützt, und ein auf der Lagerschale außenseitig aufliegendes Verschlusselement. Dieses Verschlusselement wird mit einer Kraft zur Einstellung einer Gelenkvorspannung beaufschlagt und nach Erreichen einer gewünschten Vorspannkraft am Gehäuse fixiert.

Das Kugelgelenk gemäß der US 3,953,139 umfasst eine einstückige elastische Lagerschale und einen Kugelzapfen mit einem schwenkbar in der Lagerschale aufgenommenen Kugelkopf. Die Lagerschale mit dem Kugelkopf wird durch eine Öffnung in ein Gehäuse eingeführt, wobei die Öffnung unter Verformung der Lagerschale durch einen Gehäusedeckel verschlossen wird. An der Lagerschale bilden sich zwei ringförmige Lagerzonen aus, an denen sich der Kugelkopf abstützt, sowie eine ringförmige Tasche zur Aufnahme von Schmiermittel.

Die EP 0 231 479 A2 offenbart ferner ein gattungsgemäßes Kugelgelenk mit einer Lagerschale aus elastischem Kunststoff. Die Lagerschale weist an ihrer dem Kugelzapfen abgewandten Stirnseite mehrere trapezförmige Biegefedern auf, die bei der Montage eines Gehäusedeckels so verformt werden, dass die aus der Verformung resultierende Rückstellkraft den Kugelkopf vom Gehäusedeckel weg beaufschlagt und gegen das Gehäuse vorspannt.

Aufgabe der Erfindung ist es, ein Kugelgelenk, insbesondere ein Radialkugelgelenk zu schaffen, bei dem durch Verschleiß der Lagerschale kein freies Spiel im Gelenk entsteht, wobei das Kugelgelenk besonders kompakt sowie einfach und preiswert herstellbar sein soll.

Erfindungsgemäß wird die Aufgabe durch ein Kugelgelenk mit den Merkmalen des Anspruchs 1 gelöst.

Die Funktion separater Federelemente wird bei dem erfindungsgemäßen Kugelgelenk von der Lagerschale übernommen, so daß die separaten Federelemente entfallen können. Das Kugelgelenk wird dadurch insgesamt kompakter sowie in seiner Konstruktion einfacher und in seiner Herstellung preiswerter.

Der Kugelkopf und die Lagerschale weisen vor einer Montage des Gehäusedeckels wenigstens abschnittweise entgegengesetzte Krümmungen auf. Somit wird verhindert, daß der Kugelkopf in diesem Bereich ohne eine Verformung der Lagerschale vollflächig an der Lagerschale anliegt. Die elastische Verformung der Lagerschale ist demzufolge nicht nur eine Materialkomprimierung unter Beibehaltung der Lagerschalenform, sondern (auch) eine tatsächliche Änderung der Schalenform, d.h. der Kontur der Lagerschale. Durch diese Formänderung ist ein relativ großer Verformungsweg möglich, ohne daß das Gelenk besonders schwergängig oder die Lagerschale besonders dick ausgeführt sein muß. Folglich können auch stärkere Verschleißerscheinungen kompensiert werden, ohne daß ein freies Spiel im Gelenk auftritt.

Hierbei wirkt ein Abschnitt der Lagerschale, der entgegen dem Kugelkopf gekrümmt ist, als ringförmige Feder, welche den Kugelkopf relativ zum Gehäuse in Richtung einer Längsachse des Kugelgelenks beaufschlagt. Die Lagerschale übernimmt dadurch die Funktion eines Federelements, welches den Kugelkopf im Gehäuse vorspannt. Bisher waren dafür üblicherweise separate Federelemente, beispielsweise Tellerfedern vorgesehen.

In ihrem unverformten Ausgangszustand weist die Lagerschale bevorzugt eine im wesentlichen zylindrische Seitenwand und eine an dem Gehäusedeckel angrenzende Stirnwand auf. In jedem Fall ist die Stirnwand dabei zwischen dem Gehäuse und dem Gehäusedeckel nach Art einer Tellerfeder vorgespannt. Die Federhärte ist damit durch einen genau definierten Lagerschalenabschnitt festgelegt. Entsprechend läßt sich über die Ausbildung der Stirnwand die spätere Rückstellkraft, die den Kugelkopf vom Gehäusedeckel weg beaufschlagt, genau einstellen.

Insbesondere können, in einem Längsschnitt durch das Kugelgelenk gesehen, der Kugelkopf und die Stirnwand der Lagerschale wenigstens abschnittsweise entgegengesetzt gekrümmt sein.

In einer weiteren Ausführungsform weist die Stirnwand der Lagerschale eine mittige Öffnung auf, wobei ein Rand der Öffnung im montierten Zustand des Kugelgelenks eine ringförmige Deckelkontaktfläche mit dem Gehäusedeckel ausbildet. Über eine Verschiebung dieses Öffnungsrands wird die Lagerschale, insbesondere die Stirnwand der Lagerschale, beim Montieren des Gehäusedeckels verformt und vorgespannt.

Am Rand der Öffnung kann dabei ein Verstärkungsring zur Vergrößerung der ringförmigen Deckelkontaktfläche angeformt sein. Der Öffnungsrand stellt ein Auflager der als Feder wirkenden Stirnwand der Lagerschale am Gehäusedeckel dar. Mit einer Verstärkung des Federauflagers werden die Randbedingungen der Stirnwand präziser festgelegt, so daß sich eine Rückstellkraft besser einstellen läßt.

Zwischen der ringförmigen Deckelkontaktfläche und der Seitenwand bildet die Stirnwand vorzugsweise eine ringförmige Kugelkopfkontaktfläche mit dem Kugelkopf aus. Über diese ringförmige Kugelkopfkontaktfläche beaufschlagt die Lagerschale den Kugelkopf mit der Rückstellkraft, die den Kugelkopf vom Gehäusedeckel weg beaufschlagt und gegen das Gehäuse vorspannt.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 einen Längsschnitt durch eine Lagerschale eines erfindungsgemäßen Kugelgelenks in einem unverformten Ausgangszustand;
- Figur 2 einen Längsschnitt durch ein erfindungsgemäßes Kugelgelenk, wobei ein Gehäusedeckel aufgesetzt, aber noch nicht am Gehäuse befestigt ist;
- Figur 3 einen Längsschnitt durch ein erfindungsgemäßes Kugelgelenk in einem fertig montierten Zustand, in dem der Gehäusedeckel am Gehäuse befestigt ist; und
- Figur 4 einen Längsschnitt durch ein Kugelgelenk gemäß dem Stand der Technik.

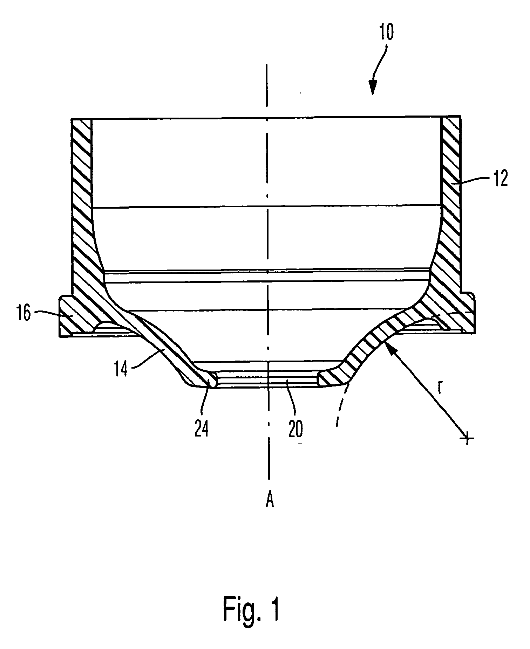

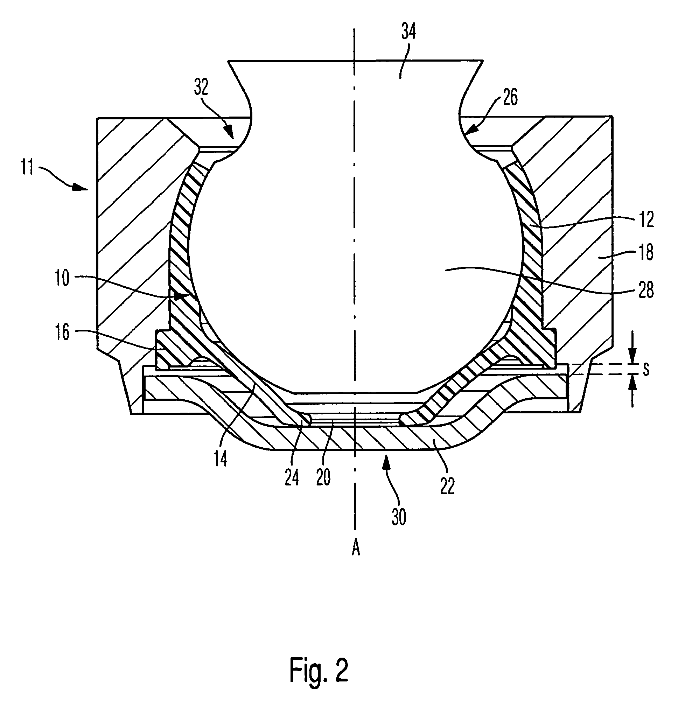

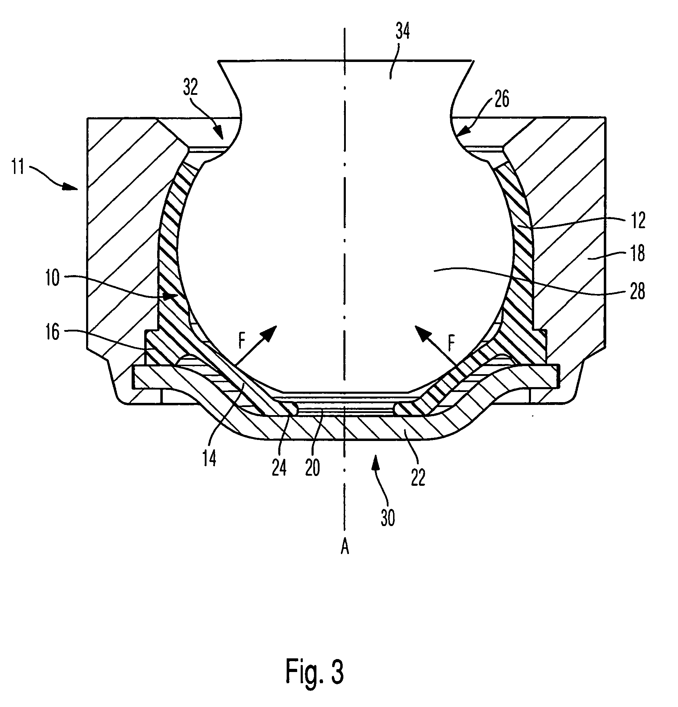

Die Figur 1 zeigt eine Lagerschale 10 für ein Kugelgelenk 11 (Figuren 2 und 3) in einem unverformten Ausgangszustand. Die Lagerschale 10 ist wenigstens abschnittsweise elastisch und vorzugsweise aus einem elastischen Kunststoffmaterial gebildet. Sie weist in der dargestellten Ausführungsform eine im wesentlichen zylindrische Seitenwand 12 und eine daran angrenzende Stirnwand 14 auf. Ein Übergangsbereich zwischen der Seitenwand 12 und der Stirnwand 14 ist verstärkt ausgeführt und weist einen Vorsprung 16 auf, über den die Lagerschale 10 in einem montierten Zustand des Kugelgelenks 11 an einem Gehäuse 18 fixiert ist (Figur 3). Damit wirkt dieser Übergangsbereich als festes Auflager für die gekrümmte Stirnwand 14. Die Stirnwand 14 ist, von außen gesehen, konkav ausgebildet und hat im vorliegenden Beispiel einen Krümmungsradius r. Ferner weist sie eine mittige Öffnung 20 auf, wobei ein Rand der Öffnung 20 im montierten Zustand des Kugelgelenks eine ringförmige Deckelkontaktfläche mit einem Gehäusedeckel 22 ausbildet (Figur 3). Der Rand dieser Öffnung 20 bildet ein weiteres Auflager für die als Feder wirkende, gekrümmte Stirnwand 14. Je genauer die Rand- bzw. Auflagerbedingungen für die Stirnwand 14 festgelegt sind, desto genauer läßt sich die gewünschte Rückstellkraft einstellen. Daher ist auch das weitere Auflager verstärkt ausgeführt, indem ein Verstärkungsring 24 zur Vergrößerung der ringförmigen Deckelkontaktfläche an den Rand der Öffnung 20 angeformt ist.

In der Figur 2 ist ein Kugelgelenk 11, genauer ein Radialkugelgelenk, dargestellt, mit dem Gehäuse 18, in dem die Lagerschale 10 angeordnet ist, und einem Kugelzapfen 26 mit einem Kugelkopf 28, wobei der Kugelkopf 28 in der Lagerschale 10 angeordnet ist. Zur Aufnahme der Lagerschale 10 und des Kugelkopfs 28 ist im Gehäuse 18 eine Montageöffnung 30 vorgesehen, die nach der Aufnahme der Lagerschale 10 und des Kugelkopfs 28 durch den Gehäusedeckel 22 verschlossen wird. Gegenüber der Montageöffnung 30 weist das Gehäuse 18 ferner eine Zapfenöffnung 32 auf, durch die sich ein Zapfenabschnitt 34 des Kugelzapfens 26 nach außerhalb des Gehäuses 18 erstreckt. Die Montageöffnung 30 und die Zapfenöffnung 32 sind in der Regel kreisförmige Öffnungen, wobei der Durchmesser der Montageöffnung 30 größer als der Durchmesser des Kugelkopfs 28 und der Durchmesser der Zapfenöffnung 32 kleiner als der Durchmesser des Kugelkopfs 28 ist. Die Mittelpunkte der Montageöffnung 30, der Zapfenöffnung 34 und der Öffnung 20 in der Lagerschale liegen dabei alle auf einer Längsachse A des Kugelgelenks 11.

Der Gehäusedeckel 22 ist in der Figur 2 bereits auf das Gehäuse 18 aufgesetzt, aber noch nicht am Gehäuse 18 befestigt. Er ist in axialer Richtung um einen Betrag s von seiner endgültigen Position im montierten Zustand des Kugelgelenks 11 entfernt, so daß die Lagerschale 10, insbesondere die Stirnfläche 14 der Lagerschale 10 noch nicht oder nur unwesentlich vorgespannt ist.

Die Seitenwand 12 der Lagerschale 10 liegt bereits im wesentlichen vollflächig am Gehäuse 18 und am Kugelkopf 28 an, wobei sie gegenüber ihrem zylindrischen Ausgangszustand (Figur 1) etwas verformt ist. Hingegen ist in der Figur 2, aber auch im fertig montierten Zustand des Kugelgelenks 11 in der Figur 3 zu erkennen, daß der Raum zwischen dem Kugelkopf 28 und dem Gehäusedeckel 22 nicht vollständig von der Stirnwand 14 der Lagerschale 10 ausgefüllt ist. Im Längsschnitt gesehen ist die Stirnwand 14 in diesem Bereich abschnittsweise entgegengesetzt zum Kugelkopf 28 gekrümmt, liegt lediglich mit einem Rand der Stirnwandöffnung am Gehäusedeckel 22 an und bildet eine ringförmige Deckelkontaktfläche mit dem Gehäusedeckel 22 aus. Zwischen dieser ringförmigen Deckelkontaktfläche und der Seitenwand 12 berührt die Stirnwand 14 den Kugelkopf 28 und bildet eine ringförmige Kugelkopfkontaktfläche mit dem Kugelkopf 28 aus. Der Übergangsbereich zwischen der Seitenwand 12 und der Stirnwand 14 der Lagerschale 10 sowie der Rand der Öffnung 20 in der Stirnwand 14 bilden Auflager für die als Feder ausgebildete Stirnwand 14 der Lagerschale 10. Um möglichst definierte Randbedingungen zu erhalten, ist die Lagerschale 10 in diesen Bereichen mit Verstärkungen ausgeführt. So ist im Übergangsbereich zwischen der Seitenwand 12 und der Stirnwand 14 der außenseitig umlaufende Vorsprung 16 angeformt, der in eine Ausnehmung des Gehäuses 18 eingreift, vorgesehen. Nach einer Befestigung des Gehäusedeckels 22 am Gehäuse 18 (Figur 3) ist der Vorsprung 16 durch den Gehäusedeckel 22 so in die Aussparung gepreßt, daß der Übergangsbereich zwischen der Seitenwand 12 und der Stirnwand 14 der Lagerschale 10 wenigstens in Richtung der Längsachse A fixiert ist. Am Rand der Öffnung der Stirnwand 14 ist ein Verstärkungsring 24 zur Vergrößerung der ringförmigen Deckelkontaktfläche angeformt. Auch diese Verstärkung am Öffnungsrand trägt zu definierten Randbedingungen der als Feder ausgebildeten Stirnwand 14 bei.

Ausgehend von Figur 2 wird der Gehäusedeckel 22 in axialer Richtung um den Betrag s auf das Gehäuse 18 zu bewegt und befestigt, so daß das fertig montierte Kugelgelenk 11 nach Figur 3 entsteht. Die Stirnwand 14 der Lagerschale 10 wird dabei nach Art einer Tellerfeder vorgespannt und elastisch verformt, wobei die aus der Verformung resultierende Rückstellkraft den Kugelkopf 28 vom Gehäusedeckel 22 weg beaufschlagt und gegen das Gehäuse 18 vorspannt. Die Verformung umfaßt dabei neben einer Materialkomprimierung in der Stirnwand 14 auch eine tatsächliche Formänderung der Stirnwand 14, bei der sich der Krümmungsradius r (vgl. Figur 1) vergrößert. Diese Verformung kann dabei so weit gehen, daß die Stirnwand 14 nach der Befestigung des Gehäusedeckels 22, im Längsschnitt des Kugelgelenks gesehen, keine Krümmung mehr aufweist und im wesentlichen eine kegelstumpfartige Form annimmt. Über die Auflager im Bereich des Vorsprungs 16 und des Verstärkungsrings 24 stützt sich die Stirnwand 14 am Gehäuse 18 sowie am Gehäusedeckel 22 ab und beaufschlagt den Kugelkopf 28 über die ringförmige Kugelkopfkontaktfläche in Richtung der Pfeile F (Figur 3). Über die gesamte ringförmige Kugelkopfkontaktfläche gesehen heben sich dabei die Kraftkomponenten, die nicht in axialer Richtung wirken, auf, so daß zur Zapfenöffnung 32 hin eine resultierende Kraft in axialer Richtung auf den Kugelkopf 28 wirkt. Infolgedessen entsteht bei auftretendem Verschleiß kein freies Spiel im Gelenk, sondern die Stirnwand 14 verformt sich zunehmend zurück in ihre Ausgangsstellung nach Figur 1 und sorgt für einen permanenten Kontakt zwischen dem Kugelkopf 28 und der Lagerschale 10.

## Patentansprüche

1. Kugelgelenk, insbesondere Radialkugelgelenk, mit
einem Gehäuse (18),
einer Lagerschale (10), die in dem Gehäuse (18) angeordnet ist, und
einem Kugelzapfen (26) mit einem Kugelkopf (28), welcher in der Lagerschale (10) angeordnet ist, wobei
das Gehäuse (18) zur Aufnahme der Lagerschale (10) und des Kugelkopfs (28) eine Montageöffnung (30) aufweist, die durch einen am Gehäuse (18) befestigten Gehäusedeckel (22) verschlossen ist und eine Stirnwand (14) der Lagerschale (10) an den Gehäusedeckel (22) angrenzt, wobei
die Lagerschale (10) vom Kugelkopf (28) und dem Gehäusedeckel (22) elastisch so verformt ist, dass die aus der Verformung resultierende Rückstellkraft den Kugelkopf (28) vom Gehäusedeckel (22) weg beaufschlagt und gegen das Gehäuse (18) vorspannt, und wobei
der Kugelkopf (28) und die Lagerschale (10) vor einer Montage des Gehäusedeckels (22) wenigstens abschnittsweise entgegengesetzte Krümmungen aufweisen,
**dadurch gekennzeichnet, dass** der Abschnitt der Lagerschale (10), der entgegen dem Kugelkopf (28) gekrümmt ist, als ringförmige Feder wirkt, welche den Kugelkopf (28) entlang einer zwischen Gehäuse (18) und Gehäusedeckel (22) liegenden ringförmigen Kontaktfläche relativ zum Gehäuse (18) in Richtung einer Längsachse des Kugelgelenks (11) beaufschlagt und wobei
die Stirnwand (14) der Lagerschale (10) zwischen dem Gehäuse (18) und dem Gehäusedeckel (22) nach Art einer Tellerfeder vorgespannt ist.

2. Kugelgelenk nach Anspruch 1, dadurch gekenzeichnet, dass die Lagerschale (10) in ihrem unverformten Ausgangszustand eine im Wesentlichen zylindrische Seitenwand (12).

3. Kugelgelenk nach Anspruch 2 ; **dadurch gekennzeichnet, dass** der Kugelkopf (28) und die Stirnwand (14) der Lagerschale (10), in einem Längsschnitt durch das Kugelgelenk (11) gesehen, wenigstens abschnittsweise entgegengesetzt gekrümmt sind.

4. Kugelgelenk nach einem der Ansprüche 2 oder 3, **dadurch gekennzeichnet, dass** die Stirnwand (14) der Lagerschale (10) eine mittige Öffnung (20) aufweist, wobei ein Rand der Öffnung (20) im montierten Zustand des Kugelgelenks (11) eine ringförmige Deckelkontaktfläche mit dem Gehäusedeckel (22) ausbildet.

5. Kugelgelenk nach Anspruch 4, **dadurch gekennzeichnet, dass** am Rand der Öffnung (20) ein Verstärkungsring (24) zur Vergrößerung der ringförmigen Deckelkontaktfläche angeformt ist.

6. Kugelgelenk nach Anspruch 4 oder 5, **dadurch gekennzeichnet, dass** die Stirnwand (14) zwischen der ringförmigen Deckelkontaktfläche und der Seitenwand (12) eine ringförmige Kugelkopfkontaktfläche mit dem Kugelkopf (28) ausbildet.

## Claims

1. A ball joint, particularly a radial ball joint, comprising
a housing (18),
a bearing shell (10) which is arranged in the housing (18), and
a ball pin (26) having a ball head (28) which is arranged in the bearing shell (10),
the housing (18) having a mounting opening (30) to receive the bearing shell (10) and the ball head (28), the mounting opening (30) being closed by a housing cover (22) which is fastened to the housing (18), and an end wall (14) of the bearing shell (10) being adjacent to the housing cover (22),
the bearing shell (10) being deformed elastically by the ball head (28) and the housing cover (22) such that the restoring force resulting from the deformation urges the ball head (28) away from the housing cover (22) and prestresses it against the housing (18), and
the ball head (28) and the bearing shell (10) having at least partially opposed curvatures before the housing cover (22) is installed,
**characterized in that** the portion of the bearing shell (10) which is curved in opposition to the ball head (28) acts as an annular spring which urges the ball head (28) relative to the housing (18) in the direction of a longitudinal axis of the ball joint (11) along an annular contact surface positioned between the housing (18) and the housing cover (22), and
the end wall (14) of the bearing shell (10) being prestressed between the housing (18) and the housing cover (22) in the manner of a plate spring.

2. The ball joint according to Claim 1, **characterized in that** in its non-deformed initial state, the bearing shell (10) has a substantially cylindrical side wall (12).

3. The ball joint according to Claim 2, **characterized in that** the ball head (28) and the end wall (14) of the bearing shell (10), viewed in a longitudinal section through the ball joint (11), are at least partially oppositely curved.

4. The ball joint according to either of Claims 2 or 3, **characterized in that** the end wall (14) of the bearing shell (10) has a central opening (20), a rim of the opening (20) forming a ring-shaped cover contact surface with the housing cover (22) in the assembled state of the ball joint (11).

5. The ball joint according to Claim 4, **characterized in that** a reinforcement ring (24) is formed integrally with the rim of the opening (20) to increase the size of the ring-shaped cover contact surface.

6. The ball joint according to Claim 4 or 5, **characterized in that** the end wall (14) forms a ring-shaped ball head contact surface with the ball head (28) between the ring-shaped cover contact surface and the side wall (12).

## Revendications

1. Joint sphérique, en particulier joint sphérique radial, comportant
un boîtier (18),
une coquille de coussinet (10) agencée dans le boîtier (18), et
un pivot sphérique (26) présentant une tête sphérique (28) qui est agencée dans la coquille de coussinet (10),
le boîtier (18) présentant pour le logement de la coquille de coussinet (10) et de la tête sphérique (28) un orifice de montage (30) qui est fermé par un couvercle (22) de boîtier fixé sur le boîtier (18), et une paroi frontale (14) de la coquille de coussinet (10) étant adjacente au couvercle (22) de boîtier,
la coquille de coussinet (10) étant élastiquement déformée par la tête sphérique (28) et le couvercle (22) de boîtier, de sorte que la force de rappel résultant de la déformation sollicite la tête sphérique (28) en éloignement du couvercle (22) de boîtier et la précontraint contre le boîtier (18), et
la tête sphérique (28) et la coquille de coussinet (10) présentant, avant un montage du couvercle (22) de boîtier, au moins sur certaines parties des courbures opposées,
**caractérisé en ce que** le tronçon de la coquille de coussinet (10) qui est arqué dans un sens opposé à la tête sphérique (28) agit en tant que ressort annulaire qui sollicite la tête sphérique (28) par rapport au boîtier (18) dans la direction d'un axe longitudinal du joint sphérique (11) le long d'une surface de contact annulaire agencée entre le boîtier (18) et le couvercle (22) de boîtier, et
la paroi frontale (14) de la coquille de coussinet (10) étant précontrainte entre le boîtier (18) et le couvercle (22) de boîtier à la manière d'un ressort à disques.

2. Joint sphérique selon la revendication 1, **caractérisé en ce que** dans son état initial non déformé, la coquille de coussinet (10) présente une paroi latérale (12) sensiblement cylindrique.

3. Joint sphérique selon la revendication 2, **caractérisé en ce que** la tête sphérique (28) et la paroi frontale (14) de la coquille de coussinet (10), vues dans une coupe longitudinale à travers le joint sphérique (11), sont au moins par tronçons arquées dans des sens opposés.

4. Joint sphérique selon l'une des revendications 2 ou 3, **caractérisé en ce que** la paroi frontale (14) de la coquille de coussinet (10) présente un orifice central (20), un bord de l'orifice (20) formant, à l'état monté du joint sphérique (11), une surface de contact de couvercle annulaire avec le couvercle (22) de boîtier.

5. Joint sphérique selon la revendication 4, **caractérisé en ce qu'**un anneau de renforcement (24) est moulé avec le bord de l'orifice (20) pour l'agrandissement de la surface de contact de couvercle annulaire.

6. Joint sphérique selon la revendication 4 ou 5, **caractérisé en ce que** la paroi frontale (14) forme entre la surface de contact de couvercle annulaire et la paroi latérale (12) une surface de contact de tête sphérique annulaire avec la tête sphérique (28).
